# EUROPÄISCHE PATENTSCHRIFT

(11) **EP 0 697 538 B1**
(45) Veröffentlichungstag und Bekanntmachung des Hinweises auf die Patenterteilung: **25.10.2000**
(21) Anmeldenummer: 95111640.9
(22) Anmeldetag: 25.07.1995
(51) Int. Cl.: F16F 1/37

(54) **Schwingungsdämpfendes Bau- oder Funktionselement**
Vibration damping element
Elément amortisseur de vibrations

(30) Priorität: 11.08.1994 DE 4428520
(43) Veröffentlichungstag der Anmeldung: 21.02.1996
(73) Patentinhaber: A. Raymond & Cie, F-38028 Grenoble-Cédex (FR); EMS-INVENTA AG, 8001 Zürich (CH)
(72) Erfinder: Lesser, Hans-Jürgen, D-79618 Rheinfelden (DE); Moser, René, CH-7000 Chur (CH)
(74) Vertreter: Kirchgaesser, Johannes, Dipl.-Ing.

(56) Entgegenhaltungen:
- EP-A- 0 062 835
- DE-U- 9 414 971
- US-A- 3 363 870

## Beschreibung

Die Erfindung betrifft ein schwingungsdämpfendes Bau- oder Funktionselement aus thermoplastischem Kunststoff.

Dämpfende Elemente werden dort angewendet, wo entweder der haltende Untergrund starken Schwingungen unterliegt oder wo die zu haltenden Gegenstände selbst Vibrationen ausgesetzt sind. Sie werden auch zur Schall- und Geräusch-Dämpfung verwendet.

Beispiel dafür ist die Verlegung von Rohrleitungen im Kraftfahrzeugbau, wo durch Pumpen, die an den Leitungen angeschlossen sind, Vibrationen erzeugt werden. Die Übertragung dieser Vibrationen auf die Karosserie ist wegen der damit verbundenen Geräuschentwicklung unerwünscht und soll durch die Verwendung von Dämpfungselementen vermieden werden.

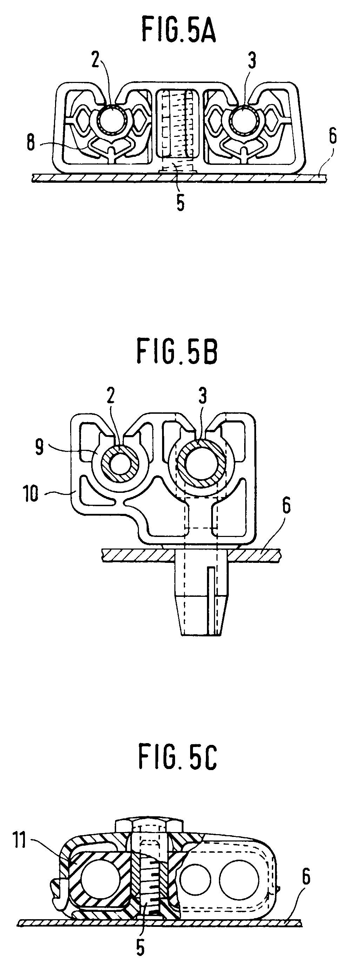

Nach dem Stand der Technik sind verschiedene schwingungsdämpfende Leitungshalter bekannt, welche in den Figuren 5 A bis C dargestellt sind und nachfolgend kurz beschrieben werden. Figur 5 A zeigt einen Leitungshalter mit flexiblen Halteelementen 8, deren Formgebung etwas kompliziert ist. Andere Leitungshalter besitzen, wie aus Figur 5 C ersichtlich, einen Gummieinsatz 11 zur schwingungsdämpfenden Aufnahme der Leitungen. Daneben gibt es noch Leitungshalter, die aus zwei Werkstoffen bestehen (Figur 5 B), wobei die zur Leitungsaufnahme dienende Schale 9 aus einer weichen Komponente besteht, die - vorzugsweise durch Kleben - in das aus einer Hartkomponente hergestellte Gehäuse 10 eingefügt ist.

Neuere Entwicklungen bestehen aus Konstuktionen, in denen Hart- und Weichkomponente im sogenannten Zweikomponenten-Spritzgießverfahren (2 K) zusammengebracht werden. Letzteren Ausführungsformen haftet der Nachteil an, daß diese durch die Verwendung von zwei verschiedenen Werkstoffen und deren Zusammenführen teuer in der Herstellung sind.

Aufgabe der Erfindung ist es, ein Dämpfungselement zur Verfügung zu stellen, das die Nachteile des Standes der Technik überwindet, insgesamt bessere Dämpfungseigenschaften aufweist, aus einem einheitlichen Werkstoff besteht und damit kostengünstiger hergestellt werden kann.

Diese Aufgabe wird durch ein Bau- oder Funktionselement aus einem thermoplastischen, geschäumten Polymeren mit den in Anspruch 1 angegebenen kennzeichnenden Merkmalen gelöst.

In den Unteransprüchen sind vorteilhafte Ausführungsformen der Erfindung enthalten.

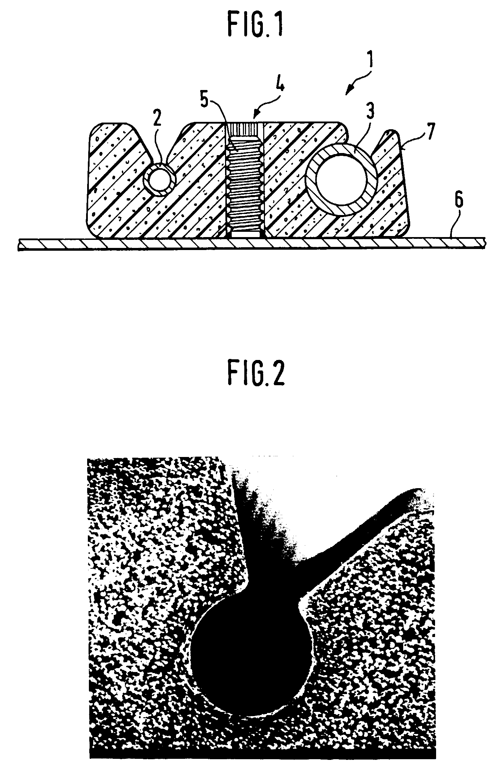

Die Erfindung betrifft insbesondere ein geschäumtes Bau- oder Funktionselement mit von innen nach außen verfeinerter Schaumstruktur und den darauf zurückzuführenden Dichte-Unterschieden, die von einem weichen schwingungsdämpfenden Kern bei zunehmender Härte bis zu einer weitgehend geschlossenen Oberfläche des Dichtungselements führen (siehe insbesondere Figur 1).

Das erfindungsgemäße Bau- oder Funktionselement besteht aus einem thermoplastischen, geschäumten Polymeren, insbesondere solchen des Typs elastomeres Polyamid, EPDM und SEBS, wobei Polyetherpolyamide und Polyetheresterpolyamide auf Basis von Polyamid 6 und Polyamid 12 besonders bevorzugt sind.

Die Vorteile der erfindungsgemäßen Bau- oder Funktionselemente sind:
- ausgezeichnete Dämpfungseigenschaften im Vergleich zum Stand der Technik,
- günstiger Kraftaufwand bei der Montage eines Bau- oder Funktionselements beim Aufdrücken auf einen Gewindebolzen,
- ausgezeichnete Beständigkeit gegen Chemikalien im Kraftfahrzeugbereich und gegen Witterungseinflüsse,
- hohe Bruch- und Schlagfestigkeit,
- Gebrauchstüchtigkeit von 120 °C bis -40 °C sowie
- Herstellbarkeit in einem einfachen und damit preiswerten Spritzgießwerkzeug durch ein einfaches Spritzgußverfahren mit nur einem polymeren Ausgangsstoff.

Das erfindungsgemäße Bau- oder Funktionselement ist insbesondere durch auf ein geeignetes Treibmittel genau abgestimmte Spritzgieß-Verarbeitungsparameter vorteilhaft herstellbar. Es erhält seine weitgehend geschlossene Oberfläche durch tiefe Werkzeugtemperaturen, welche formteilbedingt vorteilhafterweise unter 50 °C liegen.

Erfindungsgemäße Bau- oder Funktionselemente können beispielsweise als Befestigungen für Rohrleitungen wie Bremsleitungen oder Kraftstoffleitungen im Kraftfahrzeugbau, als Montageplatten oder als Unterbodenabdeckung sowie als Auskleidungsmaterial Verwendung finden.

Die Erfindung soll an Hand des in der Zeichnung dargestellten Ausführungsbeispiels näher erläutert werden. Es zeigen:
- Fig. 1: einen aus Strukturschaum hergestellten erfindungsgemäßen Leitungshalter im Schnitt mit einem Aufnahmeteil zur Befestigung auf einem Gewindebolzen;
- Fig. 2: einen vergrößerten Teil-Schnitt durch den erfindungsgemäßen Leitungshalter;
- Fig. 3: ein Vergleich der Schwingungsdämpfung zwischen einem erfindungsgemäßen geschäumten Bau- oder Funktionselement und einem Zweikomponenten-Formteil;
- Fig. 4: einen Vergleich der Schwingungsdämpfung zwischen einem erfindungsgemäßen geschäumten Bau- oder Funktionselement und einem Formteil mit Gummieinsatz und
- Fig. 5 A,B,C: drei Leitungshalter nach dem Stand der Technik.

Der in Fig. 1 im Schnitt dargestellte erfindungsgemäße Leitungshalter 1 dient zur Aufnahme und zur schwingungsdämpfenden Halterung von Leitungsrohren 2 und 3. Der Leitungshalter 1 ist hierbei mittig mit einer Aufnahmebohrung 4 zur Befestigung auf einem Gewindebolzen 5 versehen, welcher auf einer Trägerplatte 6 aufgeschweißt oder sonstwie befestigt ist.

Wie insbesondere aus dem Schnittbild in Fig. 2 erkennbar ist, ist der Leitungshalter 1 aus thermoplastischem Kunststoff hergestellt, und zwar aus einem geschäumten Polymeren, dessen Schaumstruktur eine von innen nach außen abnehmende Porengröße aufweist und mit einer weitgehend glatten Oberfläche 7 abschließt.

Die Porengröße bewegt sich zweckmäßigerweise zwischen 85 und 2000 µm, und die damit einhergehende Dichte liegt zwischen 0,5 und 0,95/cm³.

Die erfindungsgemäßen geschäumten Polymere sind vorzugsweise aus der Gruppe der Polyamid-Elastomere, der EPDM- und SEBS-Polymere ausgewählt, wobei Polyetherpolyamide oder Polyetheresterpolyamide auf der Basis PA6 oder PA12 in Verbindung mit 1 bis 7 Gew.-%, bevorzugt 1 bis 5 Gew.-%, besonders bevorzugt 1 bis 3 Gew.-%, Treibmittel besonders geeignet sind.

Die Menge des Treibmittels, dessen Basis ein modifiziertes Azodicarbonamid ist, muß auf Größe und Formgebung des Bau- oder Funktionsteils abgestimmt werden.

Die erfindungsgemäßen geschäumten Polymere können mit Additiven nach dem Stand der Technik modifiziert sein, insbesondere können sie flammfest oder hitzestabil ausgestattet sein.

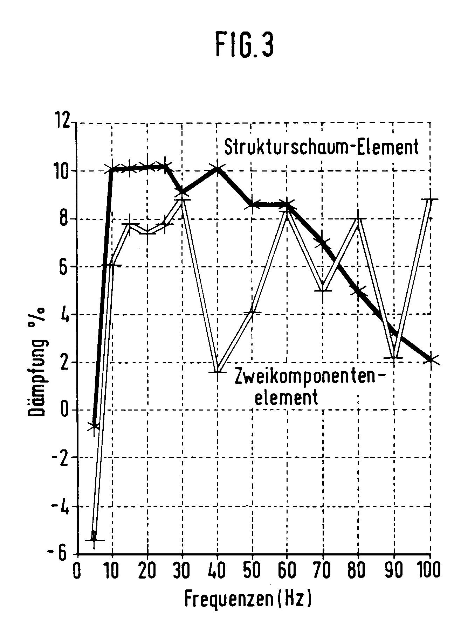

Fig. 3 zeigt das Dämpfungsverhalten eines erfindungsgemäßen Strukturschaumteils und eines Zweikomponenten-Formteils (2K) gemäß Fig. 5B. Wie aus dem Kurvenverlauf erkennbar ist, besitzt das Strukturschaumteil hierbei im Bereich von 10 bis 100 Hz ein sehr homogenes Dämpfungsverhalten. Im Vergleich dazu hat das 2K-Teil ein etwas schlechteres Dämpfungsverhalten zwischen 7 und 70 Hz mit einem deutlichen Abfall bei 40 Hz.

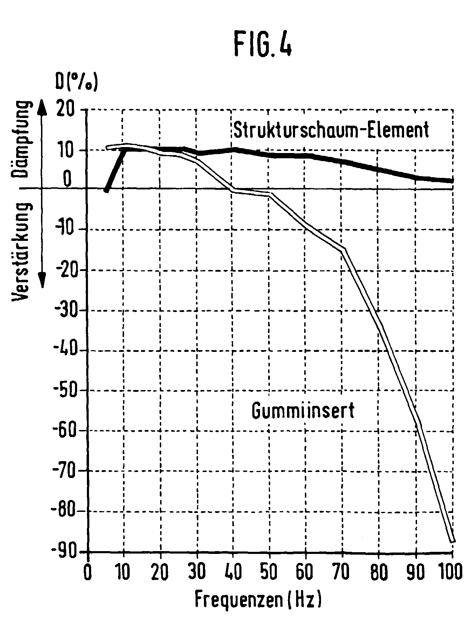

Fig. 4 zeigt das Dämpfungsverhalten eines erfindungsgemäßen Bau- oder Funktionselementes im Vergleich zu einem gleichartigen Formteil mit Gummieinsatzteil gemäß Fig. 5 C). Wie aus dem Kurvenverlauf erkennbar ist, läßt die Dämpfung beim Gummiteil ab 30 Hz nach, um dann ab 40 Hz sogar in eine Schwingungsverstärkung überzugehen. Demgegenüber ist das Dämpfungsverhalten des erfindungsgemäßen Bau- oder Funktionselement von 10 bis 40 Hz nahezu konstant und wird erst ab 60 Hz allmählich schlechter.

Eine weitere Bestätigung für das ausgezeichnete Dämpfungsverhalten des erfindungsgemäßen Bau- oder Funktionselementes zeigt der nachfolgend beschriebene Impedanztest.

Hierbei werden Schwingungserreger über einen Impedanzmeßkopf an ein Befestigungselement gekoppelt. Das Befestitgungselement ist mittels Halterung an einer schwerden Grundplatte angebracht. Der Impedanzmeßkopf mißt die eingeleitete Kraft und die resultierende Schwingungsbeschleunigung am Ort der Einleitung. Aus ihnen läßt sich die Impedanz bestimmen, die ein Maß für die dynamische Steifigkeit der Besfestigungselemente am Ort der Erregung ist. Bei kleiner Impedanz vermag eine relativ geringe Erregerkraft große Vibrationsbewegungen auszulösen.

Die Impedanz setzt sich zusammen aus der Resistanz und der Reaktanz. Die Resistanz beschreibt einen geschwindigkeitsproportionalen Dämpfer. Sie gibt die durch Dämpfung absorbierte Körperschalleistung an. Zur Kennzeichnung der Dämpfung dient der Verlustfaktor. Er erfaßt den auf eine Periode der Schwingung bezogenen Energieanteil, der durch Dämpfung in Wärme umgesetzt wird.

| | Formteil mit Gummieinsatz | erfindungsgemäßes Bau- oder Funktionselement |
|---|---|---|
| f(r) (Hz) | 1100 | 4000 |
| R (kg/s) | 42 | 20 |
| η % | ≈ 35 | 7 |
| R min bei 0-2000 Hz | R > 42 | R > 43 |

Hierin bedeuten:
- f(r): Frequenz, bei der das Befestigungselement eine Resonanzstelle hat, d.h. bei der dieses leicht in Schwingungen versetzt werden kann
- R: Resistanz
- η: Dämfung bei Resonanz
- R min: minimale Resistanz im interessanten Frequenzbereich zwischen 0 bis 2000 Hz.

Wie der Test gezeigt hat, ist die Resistanz des erfindungsgemäßen Bau- oder Funktionselements bis 1400 Hz höher als die des Vergleichsteils mit Gummieinsatz. Die Dämpfung im interessierenden Bereich zwischen 0 und 2000 Hz ist ausgezeichnet.

Die erfindungsgemäßen Bau- oder Funktionselemente finden Verwendung bei der Herstellung von Befestigungselementen, insbesondere Leitungshaltern, bei Montageplatten, Auskleidungs- und Dämpfungsformteilen.

## Patentansprüche

1. Schwingungsdämpfendes Bau- oder Funktionselement aus einem thermoplastischen geschäumten Polymeren sowie gegebenenfalls üblichen Additiven, dadurch gekennzeichnet, daß das Polymere ausgewählt ist aus der Gruppe Polyamid-Elastomere, der EPDM- und SEBS-Polymere, und daß seine Schaumstruktur eine von innen nach außen abnehmende Porengröße aufweist und mit einer geschlossenen glatten Oberfläche abschließt.

2. Bau- oder Funktionselemente nach Anspruch 1, dadurch gekennzeichnet, daß die Porengröße zwischen 85 und 2000 µm und die Dichte zwischen 0,5 und 0,95 cm³ liegt.

3. Bau- oder Funktionselemente nach Anspruch 1 oder 2, dadurch gekennzeichnet, daß sie einen durchschnittlichen Aufschäumungsgrad von 5 % bis 50 % aufweist.

4. Bau- oder Funktionselemente nach einem der Ansprüche 1 bis 3, dadurch gekennzeichnet, daß das Polyamid-Elastomere ein Polyetherpolyamid oder ein Polyetheresterpolyamid auf der Basis von Polyamid 6 oder Polyamid 12 ist.

5. Bau- oder Funktionselemente nach Anspruch 4, dadurch gekennzeichnet, daß das Polyamid-Elastomere ein Polyetheresterpolyamid auf der Basis von Polyamid 12 und Polypropylenetherdiamin ist.

6. Bau- oder Funktionselemente nach Anspruch 1 bis 5, dadurch gekennzeichnet, daß zur Herstellung des geschäumten Polymeres 1 bis 7 Gew.-%, bevorzugt 1 bis 5 Gew.-%, besonders bevorzugt 1 bis 3 Gew.-% Treibmittel verwendet wird.

7. Bau- oder Funktionselement nach einem der Ansprüche 1 bis 6, dadurch gekennzeichnet, daß die thermoplastischen geschäumten Polymere flammfest oder hitzestabil ausgestattet sind.

8. Verwendung der Bau- oder Funktionselemente nach einem der Ansprüche 1 bis 7 zur Herstellung von Leitungshaltern, Befestigungselementen, Montageplatten, Auskleidungs- und Dämpfungsformteilen.

## Claims

1. A vibration-damping structural or functional element comprising a thermoplastic foamed polymer and possibly usual additives, characterised in that the polymer is selected from the group of polyamide elastomers, EPDM and SEBS polymers, and that its foam structure is of a pore size which decreases from the inside outwardly, and its foam structure terminates with a closed smooth surface.

2. Structural or functional elements according to claim 1 characterised in that the pore size is between 85 and 2000 µm and the density is between 0.5 and 0.95 cm³.

3. Structural or functional elements according to claim 1 or claim 2 characterised in that it has an average degree of foaming of 5% to 50%.

4. Structural or functional elements according to one of claims 1 to 3 characterised in that the polyamide elastomer is a polyether polyamide or a polyether ester polyamide based on polyamide 6 or polyamide 12.

5. Structural or functional elements according to claim 4 characterised in that the polyamide elastomer is a polyether ester polyamide based on polyamide 12 and polypropylene ether diamine.

6. Structural or functional elements according to claims 1 to 5 characterised in that from 1 to 7% by weight and preferably from 1 to 5% by weight and particularly preferably from 1 to 3% by weight of propellant is used to produce the foamed polymer.

7. Structural or functional elements according to one of claims 1 to 6 characterised in that the thermoplastic foamed polymers are adapted to be flame-resistant or heat-stable.

8. Use of the structural or functional elements according to one of claims 1 to 7 for the production of line holders, fixing elements, mounting plates and shaped lining and damping members.

## Revendications

1. Elément fonctionnel ou de construction amortisseur de vibrations en polymère thermoplastique expansé avec adjonction, le cas échéant, d'éléments d'addition classiques, caractérisé en ce que le polymère est choisi dans le groupe des élastomères - polyamides, des polymères EPDM et SEBS et en ce que les alvéoles constituant sa structure expansée ont une taille qui diminue de l'intérieur vers l'extérieur et se terminent par une surface fermée lisse.

2. Eléments fonctionnels ou de construction selon la revendication 1, caractérisés en ce que la grosseur des pores se situe entre 85 et 2000 µm et la densité entre 0,5 et 0,95 cm3.

3. Eléments fonctionnels ou de construction selon la revendication 1 ou 2, caractérisés en ce qu'ils présentent un taux d'expansion moyen allant de 5% à 50%.

4. Eléments fonctionnels ou de construction selon l'une des revendications 1 à 3, caractérisés en ce que l'élastomère - polyamide est un polyamide - polyéther ou un polyamide d'ester de polyéther à base de polyamide 6 ou de polyamide 12.

5. Eléments fonctionnels ou de construction selon la revendication 4, caractérisés en ce que l'élastomère - polyamide est un polyamide d'ester de polyéther à base de polyamide 12 et de diamine d'éther de polypropylène.

6. Eléments fonctionnels ou de construction selon la revendication 1 à 5, caractérisés en ce qu'on utilise, pour la fabrication du polymère expansé 1 à 7% en poids, de préférence 1 à 5% en poids et avec une préférence toute particulière 1 à 3% en poids d'agent d'expansion.

7. Elément fonctionnel ou de construction selon l'une des revendications 1 à 6, caractérisé en ce que les polymères thermoplastiques expansés sont formulés de manière à résister à l'action du feu ou à la dégradation par la chaleur.

8. Utilisation des éléments fonctionnels ou de construction selon l'une des revendications 1 à 7 pour la fabrication de supports de conduites, d'organes de fixation, de platines de montage et de pièces de forme d'amortissement et de garnissage.
